# EUROPEAN PATENT APPLICATION

(11) **EP 4 470 806 A1**
(43) Date of publication of application: **04.12.2024**
(21) Application number: 23743261.2
(22) Date of filing: 18.01.2023
(51) Int. Cl.: B60H 1/00, B60H 1/08

(54) **VEHICLE AIR-CONDITIONING DEVICE**

(30) Priority: 24.01.2022 JP 2022008380
(71) Applicant: Valeo Japan Co., Ltd., Kumagaya-Shi SAITAMA 360-0193 (JP); TOYOTA JIDOSHA KABUSHIKI KAISHA, Toyota-shi Aichi 471-8571 (JP)
(72) Inventor: ARAKI, Daisuke, Kumagaya-shi, Saitama 360-0193 (JP); UENO, Shota, Kumagaya-shi, Saitama 360-0193 (JP); IKEDA, Kouji, Toyota-shi, Aichi 471-8571 (JP)
(74) Representative: Cabinet Beau de Loménie
(86) International application number: PCT/JP2023/001265
(87) International publication number: WO 2023/140267

(57) **Abstract**

A vehicle air conditioner (10) includes a unit case (30) having an internal space (S1), a heater (22) disposed in the internal space (S1) and capable of heating air, a heat medium supply pipe (23) capable of supplying a heat medium to the heater (22), a heat medium recovery pipe (24) capable of discharging the heat medium to the outside of the unit case (30), and a protection cover (40) provided along an outer peripheral surface (31) of the unit case (30) and covering the heat medium supply pipe (23) and the heat medium recovery pipe (24). The protection cover (40) includes an air inflow portion (51) formed to allow air to flow into the heat medium pipe accommodation space (S2), and an air outflow portion (52) formed above the air inflow portion (51) to allow air in the heat medium pipe accommodation space (S2) to flow out.

## Description

### Technical Field

The present invention relates to a vehicle air conditioner for adjusting a temperature of a vehicle interior.

### Background Art

Vehicle air conditioners are mounted on many vehicles to control the temperature in a vehicle interior. As a background art related to a vehicle air conditioner, there is a technique disclosed in PTL 1.

The vehicle air conditioner disclosed in PTL 1 is provided with a hot water heater capable of warming air inside a unit case through which air can pass, and is coupled to a hot water supply pipe capable of supplying hot water to the hot water heater, and a hot water recovery pipe capable of draining the hot water to an outside of the unit case. A protection cover covering the hot water supply pipe and the hot water recovery pipe along an outer peripheral surface is provided outside the unit case.

### Citation List

### Patent Literature

PTL 1: JP9-48229A

### Summary of Invention

### Technical Problem

A vehicle air conditioner disclosed in PTL 1 covers a hot water supply pipe and a hot water recovery pipe by a protection cover. The hot water supply pipe and the hot water recovery pipe are heated to a high temperature by passing hot water. Therefore, heat is confined in the space formed by the protection cover and the outer peripheral surface of the unit case. The heat accumulated in this space is transmitted to the inside of the unit case via the unit case. For example, there is a part through which cold air flows inside the unit case, and there is a possibility that the heat transmitted through the unit case is affected. That is, when heat is accumulated in the space surrounded by the protection cover, the efficiency of adjusting temperature in the vehicle interior to the set temperature may decrease.

An obj ect of the present invention is to provide a vehicle air conditioner that can efficiently perform adjustment to a set temperature.

### Solution to Problem

In the following description, reference numerals in the accompanying drawings are appended in parentheses to facilitate understanding of the invention, but the invention is not limited to illustrated embodiments.

According to the present invention, provided is a vehicle air conditioner including:
a unit case (30) having an internal space (S1) through which blown air can pass;
a heater (22) disposed in the internal space (S1) and capable of heating air passing therethrough;
a heat medium supply pipe (23) coupled to the heater (22) and capable of supplying a heat medium from the outside of the unit case (30) to the heater (22);
a heat medium recovery pipe (24) coupled to the heater (22) and capable of discharging the heat medium, which is flowed out from the heater (22), to the outside of the unit case (30) ; and
a protection cover (40) provided along an outer peripheral surface of the unit case (30) and covering the heat medium supply pipe (23) and the heat medium recovery pipe (24), wherein
   the protection cover (40) includes
   an air inflow portion (51) formed to allow air to flow into a heat medium pipe accommodation space (S2), which is a space formed by the protection cover (40) and the outer peripheral surface of the unit case (30), and
   an air outflow portion (52) formed above the air inflow portion (51) and allowing air in the heat medium pipe accommodation space (S2) to flow out.

### Advantageous Effects of Invention

According to the present invention, it is possible to provide a vehicle air conditioner capable of efficiently performing adjustment to the set temperature.

### Brief Description of Drawings

[Fig. 1] Fig. 1 is a perspective view of a vehicle air conditioner according to Example 1, as viewed from a left-front side.
[Fig. 2] Fig. 2 is a view taken along the arrow 2 of Fig. 1.
[Fig. 3] Fig. 3A is a left side view of the vehicle air conditioner, and Fig. 3B is a rear view of a temperature adjuster.
[Fig. 4] Fig. 4 is a view taken along the arrow 4 of Fig. 2.
[Fig. 5] Fig. 5 is a diagram illustrating the operation of the vehicle air conditioner illustrated in Fig. 1.
[Fig. 6] Fig. 6A is a view illustrating the effect of a protection cover according to a comparative example, and Fig. 6B is a view illustrating the effect of the protection cover according to the embodiment.
[Fig. 7] Fig. 7 is a side view of a protection cover used in a vehicle air conditioner according to Example 2.

### Description of Embodiments

Embodiments of the present invention will be described below based on the accompanying drawings. In the description, "front" and "rear" refer to front and rear with reference to a travel direction of a vehicle on which a vehicle air conditioner is mounted, and "left" and "right" refer to left and right with reference to a passenger in the vehicle. In the drawings, Fr indicates the front, Rr indicates the rear, Le indicates the left, Ri indicates the right, Up indicates the up, and Dn indicates the down.

### <Example 1>

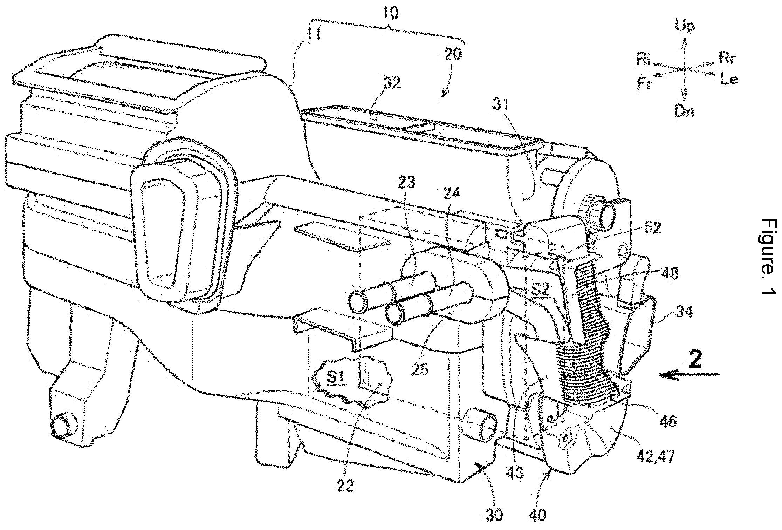

Fig. 1 is referred. A vehicle air conditioner 10 (hereinafter, referred to as "air conditioner 10") extends in the left-right direction in the front portion of the vehicle interior. The air conditioner 10 includes a blower portion 11 that can take in air from the vehicle interior and/or outside the vehicle to blow air, and a temperature adjuster 20 that can control the temperature of blowing air delivered from the blower portion 11 to a predetermined temperature. A wind sent from the blower portion 11 toward the left flows rearwards in the temperature adjuster 20. The air whose temperature is adjusted by the temperature adjuster 20 is blown into the vehicle interior.

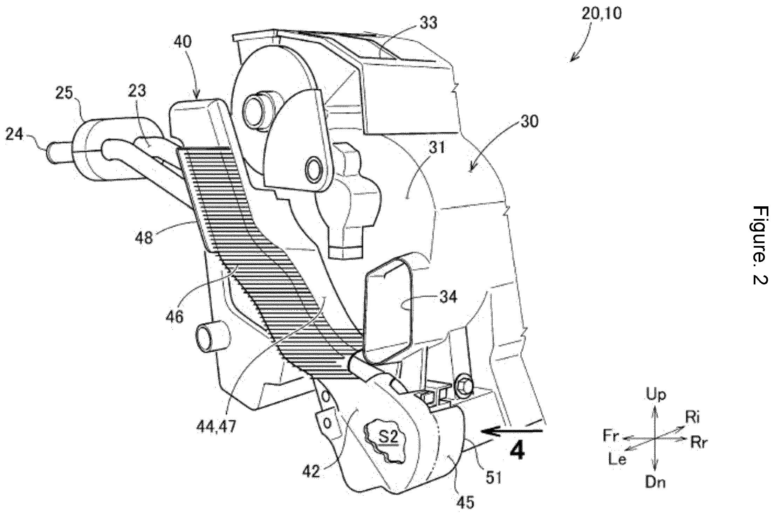

Fig. 2 is also referred. The temperature adjuster 20 includes a unit case 30 having an internal space S1 through which the blown air can pass, a heater 22 disposed in the internal space S1 and capable of warming the passing air, a heat medium supply pipe 23 coupled to the heater 22 and capable of supplying a heat medium from the outside of the unit case 30 to the heater 22, a heat medium recovery pipe 24 coupled to the heater 22 and capable of discharging the heat medium that is flowed out from the heater 22, to the outside of the unit case 30, a pipe holding portion 25 holding both the heat medium supply pipe 23 and the heat medium recovery pipe 24, and a protection cover 40 provided along the outer peripheral surface 31 of the unit case 30 and covering the heat medium supply pipe 23 and the heat medium recovery pipe 24.

The unit case 30 is formed by combining multiple resin components and has a hollow shape. The unit case 30 includes a defroster outlet 32 for blowing air toward the windshield, a vent outlet 33 for blowing air toward the upper half body of the occupant, and a foot outlet 34 for blowing air toward the foot of the occupant.

The heater 22 performs heat exchange between the heat medium flowing inside and the air flowing through the internal space S1 and thus heats the air. The heat medium is, for example, hot water. Hereinafter, the heat medium may be referred to as "hot water".

The air conditioner 10 may be provided with an electric heater (not shown) , which increases the temperature by being energized, together with the heater 22.

The heat medium supply pipe 23 is, for example, a metal pipe, through which hot water (engine cooling water) warmed by the engine flows. The hot water flowed inside the heat medium supply pipe 23 is supplied to the heater 22. Meanwhile, the heat medium recovery pipe 24 is a metal pipe, through which hot water subjected to heat exchange in the heater 22 flows. The hot water flowing through the heat medium recovery pipe 24 is returned to the engine and warmed by heat exchange with the engine, for example. Hereinafter, the heat medium supply pipe 23 and the heat medium recovery pipe 24 may be collectively referred to as "heat medium pipes 23 and 24".

The pipe holding portion 25 is positioned in front of the protection cover 40. The pipe holding portion 25 includes two components, which are upper and lower components, and sandwiches the heat medium pipes 23 and 24. The upper or lower component of the pipe holding portion 25 is integrated with the unit case 30, for example.

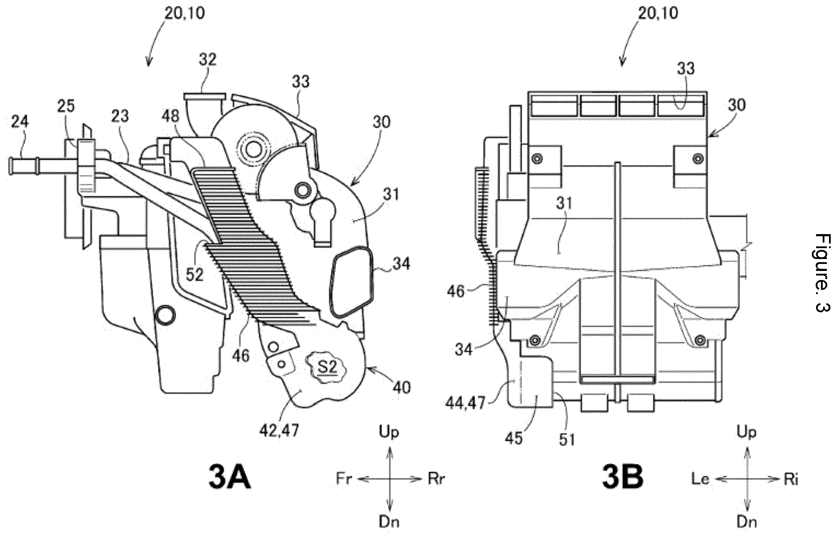

Figs. 3A and 3B are referred. The protection cover 40 is a resin member provided along the outer peripheral surface 31 of the unit case 30. The protection cover 40 faces the outer peripheral surface 31 of the unit case 30 in a substantially U shape.

Figs. 1 and 2 are referred. The protection cover 40 includes: a bottom face portion 42 facing the outer peripheral surface 31 of the unit case 30; a front face portion 43 extending from the front end of the bottom face portion 42 toward the outer peripheral surface 31; a rear face portion 44 extending from the rear end of the bottom face portion 42 toward the outer peripheral surface 31; and an extension portion 45 extending from the lowermost lower end of the bottom face portion 42 along the rear surface of the unit case 30. A large number of protrusions 46 protruding outward are provided in the bottom face portion 42.

The outer peripheral surface of the bottom face portion 42, the front face portion 43, the rear face portion 44, and the extension portion 45 may be referred to as an outer peripheral surface 47 of the protection cover 40. A space surrounded by the outer peripheral surface 31 of the unit case 30 and the protection cover 40 is referred to as a heat medium pipe accommodation space S2 in which a part of the heat medium pipes 23 and 24 is accommodated.

An air inflow portion 51 is formed at a lower end of the protection cover 40 to allow air in the vehicle interior to flow into the heat medium pipe accommodation space S2. An air outflow portion 52 is formed at an upper portion of the protection cover 40 to allow air in the heat medium pipe accommodation space S2 to flow out.

In the present example, the upper surface of the protection cover 40 is closed. That is, the air outflow portion 52 is formed below the upper end of the protection cover 40 and above the air inflow portion 51.

The air outflow portion 52 is formed in the front face portion 43, and the wall portion 48 is raised outward along the edge of the air outflow portion 52. The wall portion 48 is raised to be higher than the protrusion 46. A part of the wall portion 48 extends rearward from the vicinity of the upper end of the air outflow portion 52.

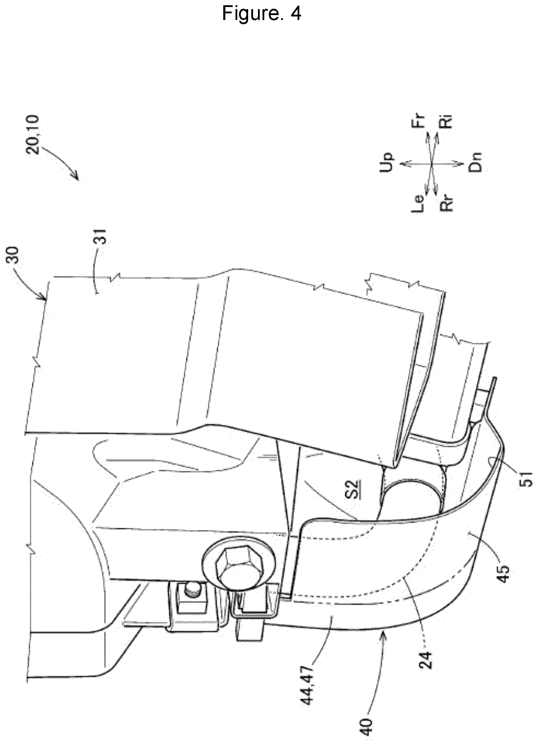

Figs. 3B and 4 are referred. A lower end of the protection cover 40 extends downward from a lower end of a side surface of the unit case 30, and an extension portion 45 extending along the lower surface of the unit case 30 is formed at a lower end of the protection cover 40. The air inflow portion 51 is positioned below the unit case 30 and is oriented toward the center of the unit case 30 in the left-right direction.

Figs. 1 and 3A are referred. The air outflow portion 52 is formed by opening a part of the front face portion 43 of the protection cover 40. The air outflow portion 52 also serves as an outlet of the heat medium pipes 23 and 24. In other words, the heat medium pipes 23 and 24 extend from the air outflow portion 52 to the outside of the air conditioner 10 and extend toward the engine room in front.

A pipe holding portion 25 is provided in front of the air outflow portion 52. That is, the heat medium pipes 23 and 24 extend from the air outflow portion 52 to the outside of the protection cover 40, and are integrally held by the pipe holding portion 25 in front of the air outflow portion 52. The heat medium pipes 23 and 24 are separated from the protection cover 40 and are not in contact with the protection cover 40.

The protrusion 46 protrudes from the outer peripheral surface 47 of the protection cover 40 and is formed in a rib shape having a predetermined length. The interval between the adjacent protrusions 46 is set to be narrower than the width of the finger of the person.

The shape of the protrusion 46 may be formed in any shape, and for example, the protrusion may be formed in a dot shape. Alternatively, it may have multiple shapes by combining ribs and dots.

The operation of the air conditioner 10 will be described.

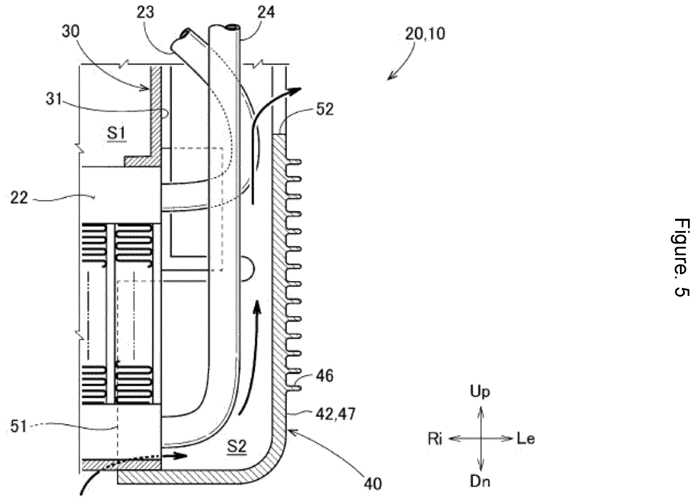

Fig. 5 is referred. During the operation of the engine, hot water flows through the heat medium pipes 23 and 24. Since the temperature of the hot water is higher than the temperature of the air outside the air conditioner 10 (air in the vehicle interior), the temperature of the heat medium pipe accommodation space S2 rises. As the temperature rises, the air in the heat medium pipe accommodation space S2 rises and flows out of the protection cover 40 through the air outflow portion 52. An amount of the air in the vehicle interior flowing into the heat medium pipe accommodation space S2 from the air inflow portion 51 corresponds to an amount of air flowing out of the heat medium pipe accommodation space S2 to the outside.

The air conditioner 10 described above will be summarized below.

Fig. 1 is referred. The air conditioner 10 includes the unit case 30 having the internal space S1 through which blown air can pass, the heater 22 disposed in the internal space S1 and capable of heating air passing therethrough, the heat medium supply pipe 23 coupled to the heater 22 and capable of supplying a heat medium from the outside of the unit case 30 to the heater 22, the heat medium recovery pipe 24 coupled to the heater 22 and capable of discharging the heat medium flowing out of the heater 22 to the outside of the unit case 30, and the protection cover 40 provided along the outer peripheral surface of the unit case 30 and covering the heat medium supply pipe 23 and the heat medium recovery pipe 24.

Fig. 5 is referred. The protection cover 40 includes the air inflow portion 51 formed to allow air to flow into the heat medium pipe accommodation space S2 which is a space formed by the protection cover 40 and the outer peripheral surface 31 of the unit case 30, and the air outflow portion 52 formed above the air inflow portion 51 and allowing the air in the heat medium pipe accommodation space S2 to flow out.

The warm air resulting from heat radiation from the heat medium supply pipe 23 and the heat medium recovery pipe 24 flows to an outside of the heat medium pipe accommodation space S2 from the air outflow portion 52, and relatively cold air flows into the heat medium pipe accommodation space S2 from the air inflow portion 51. Accordingly, it is possible to prevent warm air from remaining in the heat medium pipe accommodation space S2, and thus suppress the protection cover 40 to reach a high temperature. It is possible to provide the air conditioner 10 capable of preventing from warming the internal space S1 via the unit case 30, specifically, a part through which cold air flows, and efficiently performing adjustment to the set temperature.

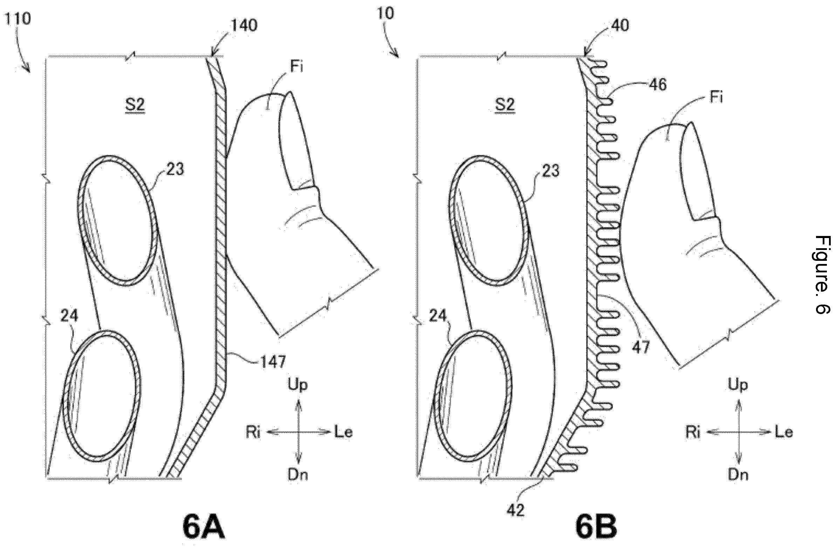

Fig. 6A is referred. Fig. 6A illustrates an air conditioner 110 according to a comparative example. An outer peripheral surface 147 of a protection cover 140 of the air conditioner 110 is formed in a planar shape. When a finger Fi of the occupant touches the protection cover 140, the finger Fi of the occupant directly touches the outer peripheral surface 147 of the protection cover 140.

Fig. 6B is referred. Fig. 6B illustrates the air conditioner 10 according to Example. The protection cover 40 has multiple protrusions 46 protruding from the outer peripheral surface 47 of the protection cover 40. The interval between the adjacent protrusions 46 is set to a pitch narrower than the width of the human finger Fi. The protection cover 40 has the multiple protrusions 46 protruding from the outer peripheral surface 47 of the protection cover 40.

Due to the protrusion 46, the surface area of the protection cover 40 can be increased, and heat in the protection cover 40 can be radiated to the outside more quickly. The warm air is further prevented from remaining in the heat medium pipe accommodation space S2. The interval between the protrusions 46 is set to a pitch narrower than the width of the human finger Fi. The temperature of the protrusion 46 is lower than the temperature of the outer peripheral surface 47 of the protection cover 40. Even when the occupant temporarily touches the protection cover 40, the occupant contacts the protrusion 46 having a lower temperature.

### <Example 2>

Next, an air conditioner 10A according to Example 2 will be described with reference to the drawings.

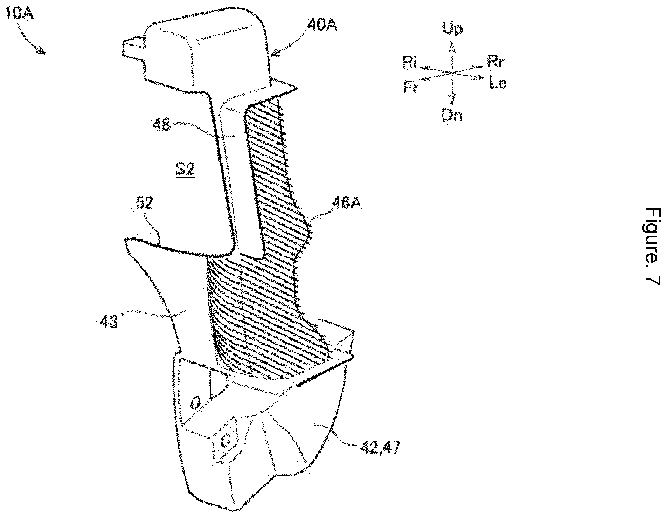

Fig. 7 illustrates a protection cover 40A used in the air conditioner 10A according to Example 2. Parts common to Example 1 are denoted by the same reference numerals, and detailed description thereof will be omitted.

As shown in FIG. 7, in the protection cover 40A used in the air conditioner 10A, a protrusion 46A is formed in an upward gradient from the rear toward the front. That is, the protrusion 46A extends in a direction inclined with respect to the horizontal direction.

The protrusion 46A may be formed in an upward gradient from the front side toward the rear side, or may be oriented in the vertical direction.

The air conditioner 10A described above also achieves the predetermined effect of the present invention.

The protrusion 46A is raised in a rib shape from the outer peripheral surface 47 of the protection cover 40A and extends in a direction that is inclined with respect to the horizontal direction. The rib-shaped protrusion 46A is inclined with respect to the horizontal direction. Accordingly, space between the protrusion 46A and the protrusion 46A is also oriented in the same direction. The space between the protrusion 46A and the protrusion 46A is inclined with respect to the horizontal direction, so that convection occurs, which can prevent heat from being accumulated in this portion. Further, since the protrusion 46A is formed in a rib shape, the strength of the protection cover 40A can be increased. That is, the basic function required for the protection cover 40A can be improved.

In the air conditioner, the heat medium flowing through the heat medium pipe is not necessarily hot water warmed by the engine. That is, the vehicle on which the air conditioner 10 is mounted is not limited to a vehicle that travels by the engine. For example, the heat medium may be hot water warmed by cooling a vehicle traveling motor or an electronic device (not illustrated). Alternatively, the heat medium may be a refrigerant having a high temperature and a high pressure by a compressor (not shown) of the refrigeration cycle.

The invention is not limited to the examples as long as operations and effects of the invention are achieved.

### Industrial Applicability

The air conditioner according to the present invention is suitable for being mounted in a front portion of a vehicle interior of a passenger vehicle.

### Reference Signs List

10, 10A: Vehicle air conditioner
22: Heater
23: Heat medium supply pipe
24: Heat medium recovery pipe
30: Unit case
31: Outer peripheral surface (of unit case)
40, 40A: protection cover
46, 46A: protrusion
47: Outer peripheral surface (of protection cover)
51: Air inflow portion
52: Air outflow portion
S1: Internal space
S2: heat medium pipe accommodation space
Fi: finger

## Claims

1. A vehicle air conditioner comprising:
a unit case (30) having an internal space (S1) through which blown air can pass;
a heater (22) disposed in the internal space (S1) and capable of heating air passing therethrough;
a heat medium supply pipe (23) coupled to the heater (22) and capable of supplying a heat medium from the outside of the unit case (30) to the heater (22);
a heat medium recovery pipe (24) coupled to the heater (22) and capable of discharging the heat medium, which is flowed out from the heater (22), to the outside of the unit case (30) ; and
a protection cover (40) provided along an outer peripheral surface (31) of the unit case (30) and covering the heat medium supply pipe (23) and the heat medium recovery pipe (24), wherein
the protection cover (40) includes
an air inflow portion (51) formed to allow air to flow into a heat medium pipe accommodation space (S2) which is a space formed by the protection cover (40) and the outer peripheral surface (31) of the unit case (30), and
an air outflow portion (52) formed above the air inflow portion (51) and allowing air in the heat medium pipe accommodation space (S2) to flow out.

2. The vehicle air conditioner according to claim 1, wherein
the protection cover (40) has multiple protrusions (46) protruding from an outer peripheral surface (47) of the protection cover (40), and
an interval between the adjacent protrusions (46) is set to a pitch narrower than a width of a finger of a person.

3. The vehicle air conditioner according to claim 2, wherein
the protrusion (46) is raised in a rib shape from an outer peripheral surface (47) of the protection cover (40) and extends in a direction that is inclined with respect to a horizontal direction.
